(19) Europäisches Patentamt
European Patent Office
Office européen des brevets

(11) **EP 1 639 865 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(21) Anmeldenummer: 04730208.8

(22) Anmeldetag: **29.04.2004**

(51) Int Cl.:
*H05B 6/80* (2006.01)

(86) Internationale Anmeldenummer:
**PCT/EP2004/004516**

(87) Internationale Veröffentlichungsnummer:
**WO 2005/004542 (13.01.2005 Gazette 2005/02)**

(54) **MIKROWELLENRESONATOR, EINE AUS EINEM SOLCHEN MIKROWELLENRESONATOR MODULAR AUFGEBAUTE PROZESSSTRASSE, EIN VERFAHREN ZUM BETREIBEN UND NACH DIESEM VERFAHREN THERMISCH PROZESSIERTE GEGENSTÄNDE/ WERKSTÜCKE MITTELS MIKROWELLE**

MICROWAVE RESONATOR, MODULAR PROCESS CHAIN MADE FROM ONE SUCH MICROWAVE RESONATOR, OPERATIONAL METHOD AND OBJECTS/WORK PIECES THERMALLY PROCESSED BY MICROWAVES ACCORDING TO SAID METHOD

RESONATEUR MICRO-ONDES, CHAINE DE PROCESSUS CONSTITUEE SELON LE PRINCIPE MODULAIRE A PARTIR D'UN RESONATEUR MICRO-ONDES, PROCEDE DE FONCTIONNEMENT ET OBJETS/PIECES TRAITES THERMIQUEMENT PAR MICRO-ONDE SELON CE PROCEDE

(84) Benannte Vertragsstaaten:
**AT BE BG CH CY CZ DE DK EE ES FI FR GB GR HU IE IT LI LU MC NL PL PT RO SE SI SK TR**

(30) Priorität: **01.07.2003 DE 10329411**

(43) Veröffentlichungstag der Anmeldung:
**29.03.2006 Patentblatt 2006/13**

(73) Patentinhaber: **Forschungszentrum Karlsruhe GmbH**
**76133 Karlsruhe (DE)**

(72) Erfinder:
• **FLACH, Andreas**
**76133 Karlsruhe (DE)**
• **FEHER, Lambert**
**76297 Stutensee (DE)**
• **NUSS, Volker**
**76872 Hergesweiher (DE)**
• **SEITZ, Thomas**
**76706 Dettenheim (DE)**

(56) Entgegenhaltungen:
**DE-A- 19 700 140     DE-C- 19 633 245**
**US-A- 4 562 409     US-A- 5 834 744**
**US-A- 6 072 168**

**Beschreibung**

Die Erfindung betrifft einen Mikrowellenresonator, eine aus einem solchen Mikrowellenresonator modular aufgebaute Anlage/Prozessstraße, ein Verfahren und nach diesem Verfahren thermisch prozessierte Gegenstände/Werkstücke mittels Mikrowelle.

Bekannt und verbreitet ist das Erwärmen von Speisen mit Mikrowelle. Ein in einen Resonatorraum eingekoppeltes elektromagnetisches Feld nimmt sofort eine stationäre Verteilung darin ein, die von der Frequenz der Mikrowelle, äquivalent von der Wellenlänge, und der Geometrie des Resonatorraumes abhängt. Die Haushaltsmikrowelle hat eine Frequenz von 2,45 GHz und damit eine Wellenlänge $\lambda$ von etwa 12 cm im lufterfüllten oder luftleeren Raum. Die Geometrie von Mikrowellengeräten für den Haushalt liegt daher in einfacher kubischer Ausgestaltung in diesen Dimensionen.

Erfahrungsgemäß geschieht die Erwärmung von in dem Resonatorraum exponierten Speisen nicht gleichmäßig. Das hängt am unterschiedlichen Wassergehalt der Speisenanteile und damit der Existenz einer lokal unterschiedlichen Dipoldichte, aber ganz wesentlich an der Verteilung des elektromagnetischen Feldes im Resonator und damit der Anregung der Dipole durch das anregende elektromagnetische Feld. Bei Erwärmung von gleichartigen Substanzen/Stoffen insbesondere ist für die gleichartige Erwärmung im gesamten Substanz-/Stoffvolumen die Feldverteilung von maßgebender Bedeutung. Ein grober aber doch wirksamer Behelf zur Vermeidung starker bis stärkerer räumlicher Feldänderungen ist eine bewegliche Fläche im Resonatorraum, an der die auftreffenden Bereiche der Mikrowellenstrahlung reflektiert werden und so Feldstärkeschwankungen nicht lokalisiert sind und damit verschmiert werden. In diesem Fall steht das Prozessgut im Resonator still. Eine andere oder zusätzliche Maßnahme ist das Bewegen des Prozessgutes, beispielsweise auf einem Drehteller oder hin und her bewegten Tisch.

In der industriellen Materialprozesstechnik ist beim Erwärmen von Prozessgut mit Mikrowelle von grundsätzlicher Bedeutung, dass das elektromagnetische Feld im gesamten Resonatorvolumen oder zumindest in einem möglichst großen zentralen Bereich des Resonatorvolumens so wenig wie möglich schwankt, also einer idealen räumlichen Gleichverteilung nahe kommt, um lokale Überhitzungen, Hotspots, zu vermeiden.

In der DE 196 33 245 wird eine polygonale Resonatorgeometrie beschrieben, in die stirnseitig exzentrisch mit geneigter Strahlachse eingekoppelt wird. Insbesondere bei hexagonalem Querschnitt der Resonatorgeometrie wird so eine Feldverteilung erreicht, mit der zumindest im zentralen Resonatorbereich ein Volumenbereich vorliegt, in dem brauchbare Feldgleichmäßigkeit besteht. Obwohl im gesamten Innern des Resonators bei Einkopplung der Mikrowelle ein elektromagnetisches Feld vorhanden ist, ist das zentrale Prozessvolumen mit homogenem Feld oder zumindest tolerierbarer Feldschwankung verhältnismäßig klein. Dieser Resonator mit seiner Art der Einkopplung kann nur als einzelner verwendet werden und ist als Modul einer Anlage nicht verwendbar.

Der Erfindung liegt die Aufgabe zugrunde, einen Resonator für eine in ihn einzukoppelnde Mikrowelle bereitzustellen, in dem sich ein Gemisch vielzahliger Moden derart ausbildet, dass im Resonatorvolumen ein möglichst großes Prozessvolumen um die Resonatorlängsachse für das thermische Prozessieren unter der Voraussetzung, dass die mittlere Feldstärke des Modengemisches einer idealen Gleichverteilung in diesem Raum nachkommt, ausgenutzt werden kann.
Ein solcher Resonator soll modulartig verwendet werden können, d.h. es soll eine Prozessstrasse zum thermischen Prozessieren von Werkstücken durch Aneinanderreihen solcher Resonatoren aufgebaut werden können.
Darüber hinaus sollen die Resonatoren jeweils so mikrowellentechnisch betrieben werden können, dass mit vorgebbarer Frequenz die Modenausbildung im Resonator bei Mikrowelleneinkopplung örtlich oszilliert oder räumlich umläuft, wandert.

Mit einem solchen Resonator sollen in industriellem Maßstab thermisch prozessierbare Werkstücke/Gegenstände über Mikrowelleneinwirkung aufgrund der volumetrischen Erwärmung mit hoher Zeit- und Energieersparnis thermisch prozessiert werden, insbesondere aber harzgetränkte Verbundstoffe, CFK und/oder GFK, gleichmäßig ausgehärtet werden, um hohe Formstabilität und mechanische Belastbarkeit zu erlangen, sowie auch Klebstoffteile und Epoxidharzbeschichtete Strukturen.

Die Aufgabe wird durch einen Mikrowellenresonator mit den Merkmalen des Anspruchs 1 gelöst.
Der Mikrowellenresonator zum thermischen Prozessieren von Werkstoffen hat grundsätzlich eine aus der DE 196 33 245 bekannte Gestalt mit konvex polygonalem Querschnitt. Der Querschnitt ist regelmäßig. Es hat sich aber aufgrund von Überlegungen und darauf basierenden Berechnungen gezeigt, dass die geradzahlige Polygonalität und mindestens Hexagonalität des Querschnitts von Vorteil für eine möglichst gleichmäßige Feldeinstellung bei Mikrowelleneinkopplung in einem großen zentralen Volumenbereich des Resonators ist. Der Resonatorinnenraum ist einfach und nie rund. Neben den beiden Stirnwänden hat er ebene, gleichartige Mantelsegmente und hat somit einen regelmäßigen Querschnitt. Abhängig von der Wellenlänge $\lambda$ der in den Resonator eingekoppelten Mikrowelle, hat er solche Dimensionen, dass sich ein hochmodiges elektromagnetisches Feld ausbilden kann.

Von Hochmodigkeit oder Übermodiertheit wird gesprochen, wenn der Resonatordurchmesser D erheblich größer als die Wellenlänge $\lambda$ ist, etwa mindestens 5 mal größer, vorzugsweise 10 mal größer oder darüber, wenn das konstruktiv machbar ist, so dass gemäss der Bedingung

$$l^2 + m^2 + n^2 = \left(\frac{D}{\lambda}\right)^2$$

zwischen den Modenzahlen l, m, n und der Wellenlänge λ und dem Durchmesser D des Resonators erheblich viele Moden (l, m, n) existieren, die anregungsfähig sind und sich überlagern und damit zur Übermodierung führen.

Die Homogenität oder zumindest geringe räumliche Schwankung des elektromagnetischen Feldes in dem großen zentralen Volumenbereich des Resonatorinnern wird maßgeblich durch mindestens ein Einkoppelstrukturpaar für die Mikrowelle erreicht. Die Einkoppelstrukturen sind gleichartig.

Ein solches Einkoppelstrukturpaar kann bei sehr großen Applikatoren auch aus mehreren Wellenleiterzügen bestehen, die parallel axial auskoppeln. Eine Mantellängskante verläuft stets zwischen einem solchen Einkoppelstrukturpaar, das sich höchstens über die Resonatorlänge bzw. die Mantellängskante erstreckt. Mehrere Einkoppelstrukturpaare sitzen in dieser Art am Resonatorumfang. Es können sich maximal N Einkoppelstrukturpaare im Resonatormantel befinden, wobei N natürlich ist und die Polygonalität angibt.

Jede Einkoppelstruktur besteht aus einer Längsanordnung von Durchbrüchen in der Resonatormantelwand, über welcher der von der Mikrowellenquelle kommende Rechteckhohlleiter endet. Diese Einkoppelstruktur im Mantelflächensegment besteht aus einer Folge von sich nicht überlappenden, äquidistant Einkoppelkonturen /-öffnungen, abwechselnd links und rechts entlang einer Geraden, der Führungsgeraden, die parallel zur zugehörigen Mantellängskante verläuft. Die Einkoppelkonturen/-öffnungen folgen in einem Abstand aufeinander, der eine phasenkonstante Auskopplung in den Resonator der sich im Rechteckhohlleiter im Basismode $TE_{01}$ befindlichen Mikrowelle bewirkt, und sich die Breite/Taille d der Schlitze aus der Bedingung für den Beugungswinkel θ bei vorgegebener Mikrowellenlänge λ aus

$$\tan\theta = \frac{\lambda}{d}$$

bestimmt. Diese Näherung gilt für Winkel θ < 5°, für Winkel θ < 2° ist sogar das erste Glied der Reihenentwicklung für den Tangens ausreichend, nämlich

$$\theta = \frac{\lambda}{d} \; .$$

Die Einkoppelkonturen haben einerseits in Abhängigkeit des ersten Reflexionsabstandes L1 der aus der Einkoppelstruktur ausgekoppelten Mikrowelle eine Weite d gemäss der gerade angeführten Beugungswinkelbedingung, um eine Aufweitung der entstehenden Wellenfont derart zu gewährleisten, dass diese weit genug aufgefächert ist, und um an zwei sich stoßenden, gegenüberliegenden Mantelflächensegmenten in zwei unterschiedlich gerichtete Bündel erst mal reflektiert zu werden. Andrerseits ist der Beugungswinkel so klein bemessen ist, dass das in den Resonator eingekoppelte Primärbündel zur Vermeidung der Rückstrahlung mit seiner Strahlenebene nicht in die eventuell gegenüberliegende Einkoppelstruktur fällt. Die so nach der Primärreflexion entstehenden gespaltenen Strahlenbündel weisen einen von ihrem/r erzeugenden Wellenleiter/Einkoppelstruktur abgewandten Drehsinn zur weiteren Reflexion und Aufteilung und damit einhergehender rauschartigen, aber elastischen und deshalb verlustfreien Zerstreuung auf.

Durch die Nutzung der symmetrischen Einkoppelstrukturpaare wird eine Amplituden-Gleichverteilung durch die Durchbruchauskopplung in den Resonator unmittelbar im Fresnelschen Nahfeld realisiert. Die weitere freie Wellenpropagation mit einhergehender Beugungsaufweitung wird beibehalten. Die sich von einer Einkoppelstruktur ausbreitende Wellenfront wird durch die flachen metallischen Mantelinnenwandsegmente unter Beibehaltung ihrer Eigenschaften elastisch vielfach reflektiert und so die entstehenden Strahlbündel stets aufgeweitet. Die Durchbrüche der Einkopplungsstruktur/en sind im Wellenleiterabschluss auf der Resonatorwand angeordnet und koppeln phasenkonstant in den Resonator aus. Aufgrund dieser Überlegungen ergibt sich auch der Abstand der Linie, entlag der sich die Auskoppelschlitze anordnen, zur Mantellängsachse. Dieser konstruktive Abstand wird, in Grenzen variierbar, aufgrund der o.e. mikrowellentechnischen Forderungen festgelegt.

Die.Unteransprüche 2 bis 4 beschreiben besondere Lagen und Geometrien für die Durchbrüche.

Liegen nach Anspruch 2 die Einkoppelkonturen mit ihrer Längsachse parallel zur Führungsgeraden, dann ist mit der jeweiligen Einkoppelkontur die stärkste Mikrowelleneinkopplung in den Resonator gegeben. Liegen sie senkrecht zu ihr, dann erreicht man die schwächste Mikrowelleneinkopplung. Eine Lage dazwischen bedeutet eine dazwischen liegende, entsprechend starke Mikrowelleneinkopplung.

Neben der geometrischen Lage der Durchbrüche der Einkoppelstrukturen eines Einkoppelstrukturpaares zueinander ist deren geometrische Form ebenfalls von Bedeutung für die Qualität der Ausbildung des elektromagnetischen Feldes im Resonator.

Herstellungstechnisch ist die einfachste Form der Einkoppelkontur das Rechteck mit der Breite d und der Länge $L = \lambda/2$ der Grundwelle $H_{10}$ im Rechteckhohlleiter (Anspruch 3). Mit dieser Geometrie gibt es mikrowellenphysikalisch ausgeprägte Verluste in der Ab-/Einstrahlung in den Resonator, die sich in der stärkeren Erwärmung, Joule'sche Erwärmung $Ri^2$ durch die Randströme insbesondere in den Eckbereichen der Einkoppelkontur, zeigt.

Eine optimierte, einfache Einkoppelkontur ist in Anspruch 4 beschrieben. Sie folgt über eine Länge $L = \lambda/2$ der Grundwellenlänge dem Verlauf zweier zueinander spiegelbildlichen elektrischen Feldlinien, den E-Feldlinien, des Grundmodes $TE_{01}$ in der Wand des Rechteckhohlleiters zumindest angenähert von Knoten zu Knoten. Im Bauch liegen diese beiden E-Feldlinien um die oben erläuterte Breite d.für die Beugung auseinander.

Aus theoretischen Überlegungen heraus besteht eine beliebige punktförmige Strahlungsquelle aus einer Reihenentwicklung von Multipolstrahlern sukzessive höher werdender Ordnung, im einfachsten Fall aus einem Dipolstrahler. Daraus kann eine komplizierte Gestalt der Einkoppelkontur abgeleitet werden, die sich im Fernfeld dieser Strahlungsquelle der idealen Form einer vorgegebenen Multipolcharakteristik machbar annähert.

Die Lage der Durchbrüche einer Einkoppelstruktur der Einkoppelstrukturpaare ist ebenfalls von Bedeutung für die Ausbildung des in den Resonator eingekoppelten Feldes. In Anspruch 5 ist diese zueinander beschrieben. Die Lage der Durchbrüche zueinander sind zur Erreichung der auszukoppelnden Phasenkonstanz äquidistant und der Durchbruchabstand zur Führungsgeraden ist derart, dass sich eine isotrope Abstrahlung im reflektierten Fernfeld ergibt.

Im Unteransprüchen 6 ist eine Einrichtung beschrieben, die zwei Dinge erledigt: erstens, zur Verbesserung der Feldgleichmäßigkeit bei einem nicht ideal homogenen Feld im Prozessvolumen des Resonators ist entlang der Schnittgeraden der beiden Strahlebenen eines Einkoppelpaares ein höchstens über die Länge der Mantelkante ragender, rotierender Modenrührer eingebaut, der, zweitens, das Zentrum der beiden eingekoppelten Strahlkeulen aus dem Einkoppelstrukturpaar streut, so dass keine der beiden Strahlebenen in eine eventuell gegenüberliegende Einkoppelstruktur fällt. Der Modenrührer soll keine, zumindest fast kein Rückreflexion des direkt aus dem Wellenleiter auftreffenden Primärbündels in den Wellenleiter zurück zulassen. Auf jeden Fall muss eine solche minimiert werden. Deshalb hat er einen elliptischen Querschnitt oder einen runden Querschnitt mit aufeinanderfolgender konkav-konvexer Kontur, wobei beim konvexen Teil die Krümmung so gehalten wird, dass der Brennpunkt nicht in die Einkoppelstruktur fällt. Dadurch würde allenfalls ein linienförmiger Anteil des auftreffenden Mikrowellenstrahls zurückgeworfen werden. Nur noch punktförmig, falls der Modenrührer zusätzlich noch längs tordiert ist.

Eine weitere Lösung der Aufgabe besteht in dem Aufbau einer Prozessstrasse gemäß den Merkmalen des Anspruchs 7. Wenigstens zwei Mikrowellenresonatoren nach Anspruch 5 oder 6 sind stirnseitig modular so aneinander gereiht, dass durch eine Passage zwischen den zwei einander gegenüberstehende Stirnwänden hindurch Prozessgegenstände vom einen Resonator zum folgenden transportiert werden können. Die Aneinanderreihung kann geradlinig oder winkelig oder gar mäanderförmig sein, so dass gegebenenfalls baulichen Bedingungen/Einschränkungen Rechnung getragen werden kann. Mit einer solchen Prozessstrasse lässt sich eine großzahlige Serie von Werkstücken fortlaufend thermisch prozessieren, beispielsweise Erwärmen, Temperatur halten und Abkühlen entsprechend einer zeitlichen Vorgabe, bzw. gemäß einer zeitlichen Sollkurve. Beim kontinuierlichen Durchlauf der Werkstücke könnte im ersten Resonator der Straße die Aufwärmung erfolgen, im zweiten das Konstanthalten der Temperatur über ein vorgegebenes Zeitintervall und im dritten das zeitkontrollierte Abkühlen.

Mit dem Resonator liegt schon bei einem Einkoppelstrukturpaar ein großes zentrales Prozessvolumen vor in dem zumindest elektromagnetische Feldverhältnisse nahezu gleichverteilt bestehen, also eine homogene Feldverteilung. Ein in dieses Prozessvolumen eingetauchtes Werkstück erfährt an jeder Stelle gleichartige Feldverhältnisse vor und wird dadurch überall gleichartig erwärmt. Mit weiteren Einkoppelstrukturpaaren am Resonator werden die Feldverhältnisse bei Mikrowelleneinkopplung in den Resonator weiter homogenisiert, wobei dadurch auch verfahrenstechnische Möglichkeiten entstehen, zeitlich oszillierende Einflussnahmen auf die Feldverteilung zu nehmen.

Die Betriebsweise bzw. das Betriebsverfahren nach Anspruch 8 ist eine weitere Lösung der Aufgabe. Die Einkopplung der Mikrowelle über die Einkoppelstrukturpaare eines Resonators wird, zeitlich um einen momentanen oder konstanten Mittelwert oszillierend, versetzt gegeneinander betrieben. Dadurch oszilliert die Modenausbildung im Resonator örtlich oder wandert zwischen zwei Bereichen hin und her, vergleichbar einer Art Wanderwelle, oder läuft gar im Resonatorvolumen um. Somit lassen sich thermische Feinausgleiche im zu prozessierenden Werkstück einstellen. D.h. durch diese Verfahrensweise wird ein im Prozessvolumen eingetauchtes Werkstück tatsächlich homogen erwärmt oder warm gehalten. Auch extrem hohe Heizraten bei höchster Temperaturgleichmäßigkeit sind durch diese Maßnahmen möglich, da die phasenbedingten Feldschwankungen eine extrem geringfügige Temperaturvariation aufweisen und damit Hot-Spot Ausbildungen oder gar etwaigem, sogenannten "Thermal Runaway" vorbeugen.

Die Art der Modenbewegung lässt sich über die Anzahl von Einkoppelstrukturpaaren am Resonator steuern, da ja minimal ein solches Paar am Resonatormantel vorhanden ist, bzw. bis maximal der Anzahl an Mantellängskanten. Die Einkopplung der gesamten elektromagnetischen Leistung in den Resonator über vorhandene $N'$ Einkoppelstrukturpaare ist

$$p(t) = \sum_{i=1}^{N'} p_i(t),$$

$$N' \leq N$$

$N$ ist die Polygonalität des Resonatorquerschnitts und $P_i(t)$ die Leistungseinkopplung am i-ten Einkoppelstrukturpaar. N' und N sind natürliche Zahlen.

p(t) ist eine Vorgabe, sie kann zeitlich konstant sein oder sich zeitlich ändern, d.h. zu- oder abnehmen. p(t) ist eine Summe aus mehren Summanden. Daraus wird ersichtlich, dass sich die $p_i(t)$-Anteile der angebauten und genutzten Einkoppelstrukturpaare nur gegenläufig ändern dürfen, um die Vorgabe zu halten. Übertragen auf den Resonatorbetrieb wird diese Art Einkopplung in den Resonator unter Einhaltung der Gesamtleistungsvorgabe p(t) als Mode-Sweeping bezeichnet.

In Anspruch 9 ist vollends beschrieben, dass die Leistungseinkopplung $p_i(t)$ über das Einkoppelstrukturpaar i vorgegeben ist, die Leistungseinkopplung $p_{rechts}(t)$ und $p_{links}(t)$ über die beiden Einkoppelstrukturen darum aber in geringem Maße, oszillierend gegenläufig, schwankt. Es gibt also zusätzlich eine Art kleines Mode-Sweeping

$$p_i(t) = p_{rechts}(t) + p_{links}(t).$$

Dadurch ist eine weitere Feinabstimmung in der homogenen Wärmebehandlung eingerichtet. HEPHAISTOS ermöglicht die komplexe Regelung/Steuerung vollständig.

Die Leistungseinkopplung kann pulsbreitengeregelt erfolgen oder kontinuierlich über die Steuerung der Elektronenstrahlstärke in der jeweiligen Mikrowellenquelle, die über einen Rechteckhohlleiterzug am Hohlleiterende durch die entsprechende Einkoppelstruktur einspeist.

In Anspruch 10 sind alle thermisch prozessierbaren Gegenstände/Werkstücke/Grünkörper angesprochen, die in einem Mikrowellenresonator nach Anspruch 5 oder 6 oder in einer Prozessstraße nach Anspruch 7 gemäß dem Verfahren nach Anspruch 8 und eventuell zusätzlich Anspruch 9 hergestellt/formstabilisiert wurden. Seien dies harzgetränkte Kohlefaserverbundwerkstoffe, CFK, harzgetränkte Glasfaserverbundwerkstoffe, GFK, thermisch aushärtbare Harze als solche und damit thermisch prozessierbare Polymere, Keramiken.

Für die in dem Resonator zu prozessierenden Gegenstände ist es zur im Werkstücksvolumen gleichmäßigen Erwärmung wichtig, dass sie im homogenen Feldbereich bzw., in dem Feldbereich mit der geringsten örtlichen Schwankung exponiert sind. Hierzu befindet sich im Resonator ein Gestell, das dauerhaft darin montiert ist oder aber zur Beladung herausgenommen und zur Prozessierung eingeschoben werden kann. Es ist aus einem das elektromagnetische Feld nicht störenden, wärmebeständigem Material und kann im Prozessvolumenbereich, also im Bereich hoher Feldhomogenität sogar metallisch sein. Der Grund ist, weil auf der Oberfläche des im Prozessvolumen eingebrachten Werkstücks die elektrischen Feldlinien auf Grund der dort bestehenden Feldsituation senkrecht oder zumindest so nahezu senkrecht stehen, dass keine Ströme in dieser Oberfläche oder allenfalls vernachlässigbare kleine, den Prozess nicht beeinträchtigende Ströme fließen.

Mit dem derartig gebauten Mikrowellenresonator wird eine axial symmetrische Feldhomogenität hoher Qualität durch Superposition zahlreicher, durch Vielfachreflexion rauschartig propagierender Strahlenbündel erreicht. Daraus resultiert im Resonatorvolumen ein zentral vorhandenes, großes nutzbares Prozessvolumen.

Im folgenden wird der Mikrowellenresonator anhand des in der Zeichnung dargestellten und experimentell genutzten Ausführungsbeispiels näher erläutert. Die Figuren zeigen:

Figur 1 den Resonatorquerschnitt mit einem Einkoppelstrukturpaar,
Figur 2 den Resonatorquerschnitt mit zwei Einkoppelstrukturpaaren,
Figur 3 beispielhafte Modenrührerquerschnitte,
Figur 4 die Einkoppelstruktur,
Figur 5 an den Grundmode angepasste Einkoppelkontur,
Figur 6a der Resonator in einem Autoklaven - Querschnitt,
Figur 6b der Resonator im Autoklaven - im Längsschnitt,

Figur 7 Mode-Sweeping,
Figur 8 Vorgabe eines zeitlichen Verlaufes,
Figur 9 mit auszuhärtendem Harz beschichteter Metallkörper.

Für die Anwendung der Mikrowellentechnik kommt, mit vertretbarem technischem Aufwand gesehen, der Bereich von 10 MHz bis 30 GHz vorzugsweise der Bereich von 900 MHz bis 25 GHz, letzterer äquivalent der Wellenlänge in Luft/Vakuum von etwa 33 cm bis 1,2 cm, für die technische Nutzung in Betracht. In diesem Band werden viele Bereiche für die Kommunikation in vielfältigster Art genutzt, so dass aufgrund dessen nur die ISM-Frequenzen, 915 MHz, 2,45 GHz (Haushaltsmikrowelle), 5,85 GHz und 24,15 GHz zur Nutzung in Betracht kommen. Resonatorgeometrien orientieren sich deshalb an den zugehörigen Wellenlängen 32,8 cm, 12,2 cm, 5,1 cm und 1,2 cm.

Hier wird im folgenden beispielsweise der prismatische Resonator mit regelmäßigem hexagonalem Querschnitt und die daraus abgeleitete Prozessstrasse erläutert. Der Resonator wird mit 2,45 GHz betrieben. Er hat solche Dimension, dass sich im Resonatorvolumen die verlangte, oben erläuterte Hochmodigkeit bei der 2,45 GHz-Mikrowelleneinkopplung ausbildet. Er ist aus Edelstahlblech gefertigt. Im Ausführungsbeispiel ist er wegen der laufend beobachteten/kontrollierten Erwärmung der zur Zeit prozessierten, harzgetränkten Verbundstoffmaterialien über beide zum Resonator türartig verschließbaren Stirnseiten zugänglich. Die Erwärmung wird über thermische Sonden, die mit dem elektromagnetischen Wechselfeld nicht wechselwirken, an unterschiedlichen Orten kontinuierlich detektiert. Über eine Thermokamera wird zusätzlich das Erwärmungsbild des Prozessgegenstandes gegebenenfalls ständig mitverfolgt. Der Erwärmungsprozess: auf Solltemperatur hochfahren

- Temperatur konstant halten, wird elektronisch über die Erwärmungs-Regel- und Steuer-Einrichtung des Systems mit interner Bezeichnung HEPHAISTOS (High Electromagnetic Power Heating Autoclave InSeT Oven System) geführt.

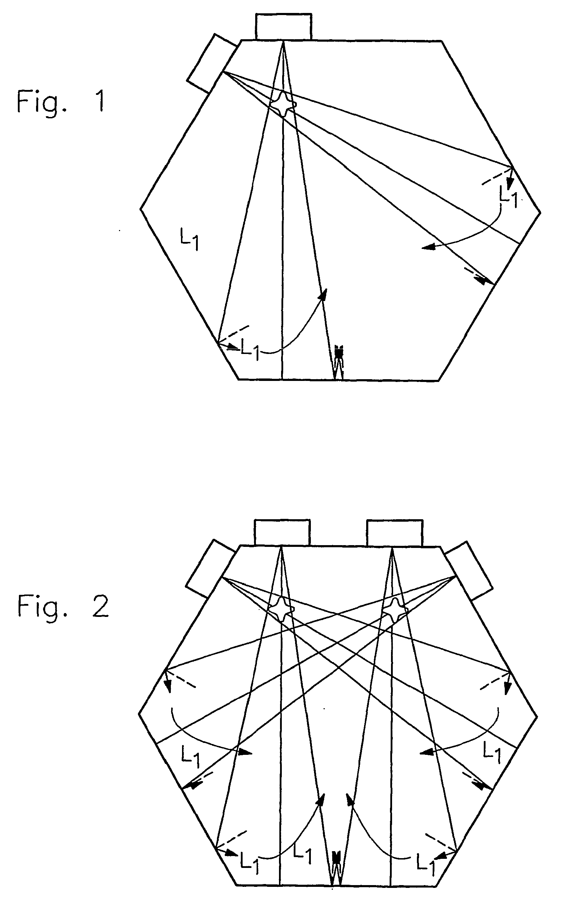

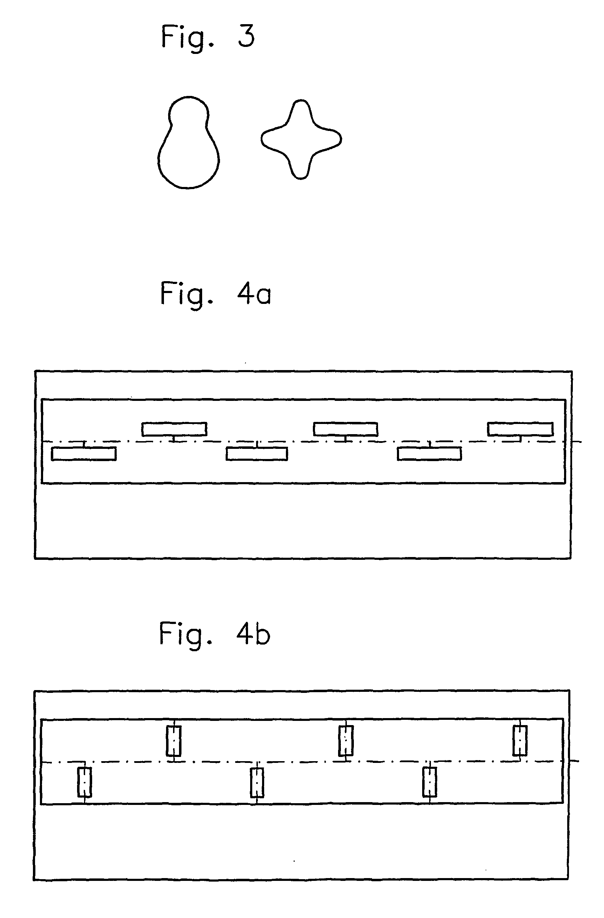

Figur 2 zeigt den Querschnitt des Resonators mit dem einen, zur oberen linken Mantelwandlängskante parallelen Einkoppelstrukturpaar. Die einzelne Einkoppelstruktur besteht aus dem an den Resonator außen herangeführten und mit der Resonatorwand integrierten Rechteckhohlleiter, er erstreckt sich hier über fast die gesamte Resonatorlänge (siehe Figur 4b). In dem mit dem Resonator gemeinsamen Wandteil befindet sich längs der Mittellinie des gemeinsamen Wandteils die eigentliche Einkoppelstruktur (siehe Figur 3).

Die Strahlebene jeder Einkoppelstruktur steht hier senkrecht zum anliegenden Mantelwandsegment. Entsprechend der Einkoppelstruktur hat die Strahlkeule in ihrem Hauptteil einen Öffnungswinkel derart, dass zwei unmittelbar aneinanderliegende Mantelwandsegmente bei der Erstreflexion getroffen werden. Hier in Figur 1, von dem Deckelmantelwandsegment ausgehend, das gegenüberliegende, parallele Bodenmantelwandsegment mit seinem links anliegenden, 60°-schrägstehenden Nachbarmantelwandsegment. Der von der seitlich oben 60°-schrägstehenden Einkoppelstruktur in den Resonator eingekoppelte Mikrowellenstrahl hat den entsprechend gleichen Strahlengang. Durch die ebenen Mantelwandsegmente wird der jeweilige divergente Mikrowellenstrahl bei den Reflexionen auf jeden Fall aufgeweitet, es bilden sich keine Fokusbereiche wie bei runder Resonatorwand längs des Resonators aus.

Die Pfeilstummel am jeweiligen Strahlrand und an der ersten jeweiligen Reflexionsfläche deuten die Erstreflexion an, der gekrümmt Pfeil jeweils das Abschwenken der Strahlränder des erstmals reflektierten Strahls.

Der Modenrührer sitzt innerhalb des Schnittbereichs der beiden noch nicht reflektierten Hauptstrahlkeulen, er erstreckt sich nahezu über die freie innere Resonatorlänge, lagert beispielsweise in den beiden Resonatorstirnwänden und ist über eine Durchführung an einer Stirnwand von außen angetrieben. Geeignet elektromagnetisch abgeschirmt, kann der elektrische Antrieb auch im Innern des Resonators sitzen. Der Querschnitt des Modenrührers ist hier sternförmig abgerundet, d.h. vier konvexe und konkave Konturabschnitte folgen abwechselnd aufeinander. Der Modenrührer hat hier einfache, nicht tordierte Gestalt und erfüllt damit die Bedingung, dass, allenfalls von einer Längslinie auf ihm ausgehend, kurzzeitig - abhängig von der Modenrührerdrehzahl - eine Strahlebene in die Einkoppelstruktur zurückreflektiert wird. Auf jeden Fall wird der zentrale Bereich der beiden Strahlkeulen, die auf den Modenrührer auftreffen, bei der Reflexion am exponierten Mantelteil erst mal stark aufgeweitet.

Figur 2 zeigt den Resonator mit zwei an der Resonatoraußenwand angebauten Einkoppelstrukturpaaren. Das zweite Einkoppelstrukturpaar schließt sich der freien Mantellängskante des gemeinsamen Mantelwandsegmentes an. Da die Einkoppelstrukturen alle gleichartig sind, sind auch die jeweiligen Strahlengänge. Da alle Mikrowellenstrahlkeulen aus sich raus aufgeweitet und im weiteren Strahlengang an Ebenen reflektiert werden, besteht sofort eine Vergleichmäßigung des elektromagnetischen Feldes im Innern des Resonators. Mit den jetzt beiden Modenrührern wird die verhältnismäßig hohe Dichte des gerade in den Resonator ausgekoppelten Mikrowellenstrahlteils, der auf den Modenrührer auftrifft, in seiner Dichte nach der dortigen Reflexion stark aufgeweitet und damit abgeschwächt wird und aufgrund der besonderen Symmetrie des Hexagons in sich elastisch reflektiert, so dass man der Felddichtegleichmäßigkeit auch damit entgegenkommt. Der Modenrührer sitzt auf der Schnittgeraden der zwei Strahlebenen des Einkoppelpaares und vermeidet so zusätzlich und auf jeden Fall, dass die beiden Strahlebenen in eine jeweils gegenüberliegende Einkoppelstruktur fallen.

Ein Modenrührer erfüllt dadurch seinen Sinn, als er zur Feldhomogenisierung beiträgt. In Figur 3 werden lediglich beispielhaft zwei Modenrührerquerschnitte vorgestellt, der sternförmig abgerundete und der schlüssellochförmige. Auf jeden Fall sollten die konkaven Konturabschnitte in Ihren Verlauf keinen solchen Krümmungsradius aufweisen, dass die Brennlinie - eine Gerade im gestreckten, eine Schraubenlinie um die Achse des Modenrührers im tordierten Fall - dieses Teils nicht auf die Einkoppelstruktur fällt, sondern sich weiter dahinter befindet. Hat der Modenrührer nur einen konvexen Querschnitt, beispielsweise linsenförmig oder ellipsoid, besteht diese Forderung nicht.

Voraussetzung für die Erreichung brauchbarer elektromagnetischer Feldverhältnisse neben der Resonatorgeometrie ist die Struktur der Einkoppelvorrichtung für die Mikrowelle. Berechnungen zeigten und Experimente bestätigen, dass sich mit einer solchen Struktur, wie in Figur 4 dargestellt, Feldhomogenität mindestens jedoch eine räumlich tolerabel geringe Feldschwankung erreichen lässt. Der gemeinsame Wandteil des an der Außenwand angebrachten Rechteckhohlleiters und der Resonatorwand hat längs der Längsachse, dies und jenseits, rechteckigspaltartige Durchbrüche in regelmäßiger Aufeinanderfolge über die Resonatorlänge. Ausgehend von der Frequenz der Mikrowelle, hier die Haushaltsmikrowellenfrequenz $\nu = 2,45$ GHz, weisen die rechteckigen Schlitze eine Länge von $L = 62.8$ mm und eine Breite d auf, die durch die Beugungsbedingung

$$\tan\theta = \frac{\lambda}{d} \quad \text{bzw.} \quad \theta = \frac{\lambda}{d}$$

determiniert ist. Auf diese Dimensionierung der Einkoppelkontur ist man nicht festgelegt, sie ist beispielhaft. Sie folgen in einem Abstand aufeinander, dass eine phasenkonstante Auskopplung in den Resonatorraum besteht.

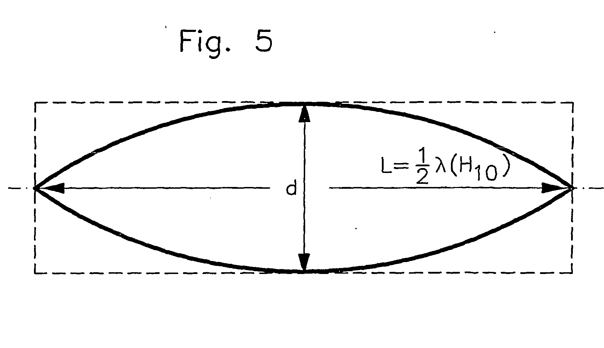

Figur 5 zeigt eine einfache Einkoppelkontur, die den mikrowellenphysikalischen Zustand berücksichtigt. In der Resonatorwand sind in dem Gebiet, über dem der Rechteckhohlleiter endet, die Einkoppelkonturen der Einkoppelstruktur derart gestaltet, als der Grundmode $TE_{10}$ in der Gestaltung der jeweiligen Einkoppelkontur zum Tragen kommt. Die Kontur folgt zwei E-Feldlinien des Grundmodes in der Wand des Rechteckhohlleiters, die bezüglich der Längsachse der Einkoppelkontur zueinander spiegelbildliche liegen. Die beiden Knoten der E-Feldlinien liegen auf dieser Längsachse, sie sind $\lambda/2$ der Grundwellenlänge auseinander und beenden die Einkoppelkontur. Der Bauch der Einkoppelkontur hat die den Beugungswinkel der Einkopplung in den Resonator berücksichtigende Breite d. Entlang genau dieser Kontur besteht die Situation $E_\perp = 0$. Diese Kontur ist geometrisch einfach, sie kann mit modernen Metallbearbeitungsmaschien noch leicht aus der Resonatorwand geschnitten werden. Komplexförmigere Einkoppelkonturen aufgrund des Ansatzes einer vielgliederigen reihenentwickelten Strahlungsquelle sind grundsätzlich möglich, für die technische Verwendung aber auf Wirtschaftlichkeit hin zu überprüfen.

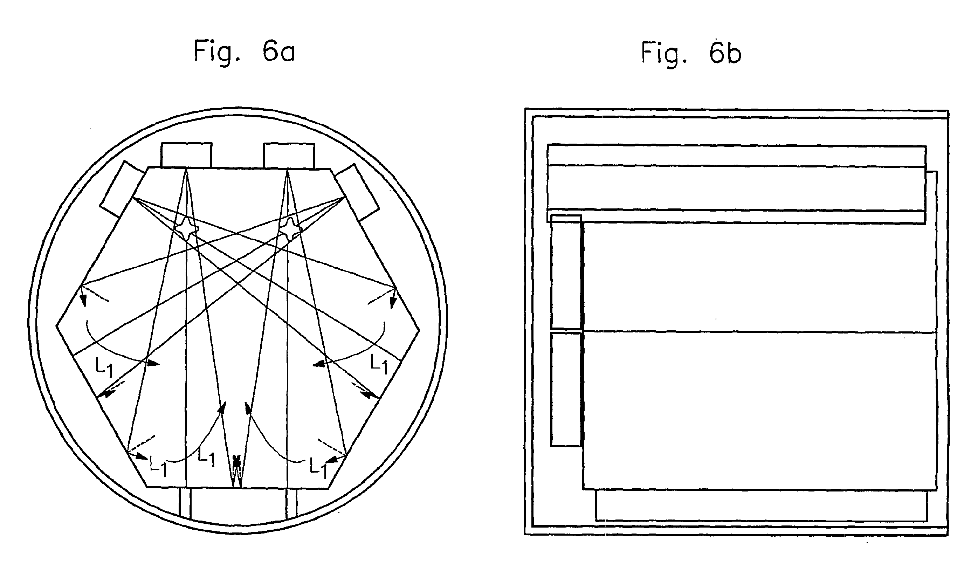

Ein Anwendungs-/Einbaufall zeigen die Figuren 6a und 6b:

Der hier angedeutet Ofen kreisrunden Querschnitts ist beispielsweise ein Autoklav, wie er aus der herkömmlich thermischen Prozessierung bekannt ist, In ihm kann bei geeigneter Konstruktion unter Unter- oder Überdruck prozessiert werden. Da ein solcher Autoklav somit hermetisch abschließbar ist, und das auch noch so, falls nicht ohnehin schon vorhanden, dass er elektromagnetisch dicht ist, ist ein rundfunktechnisch störungsfreier Einsatz völlig unproblematisch. Der Resonator, mikrowellentechnisch komplett bestückt, ist hier über Kufen in den Autoklaven eingeschoben. Er ist darin lösbar oder unlösbar verankert, das ist von der insgesamten Prozessführung abhängig. Die energetische Versorgung als auch mess- und regeltechnische Leitungen zur Steuerung und Überwachung geschieht über für den zu fahrenden Prozess technisch geeignete Durchführung im Autoklaven und auch, soweit nötig, im Resonator. In den beiden Figuren 6a, Querschnitt, Figur 6b, axialer Längsschnitt, ist die sehr einfache technische Transportlösung der Kufen oder Schienen angedeutet. Bei höherem Gewicht hat der Resonator an seiner Außenwand Ösen und/oder Haken angebracht, über die er mit Hilfe eines Krans bewegt werden kann.

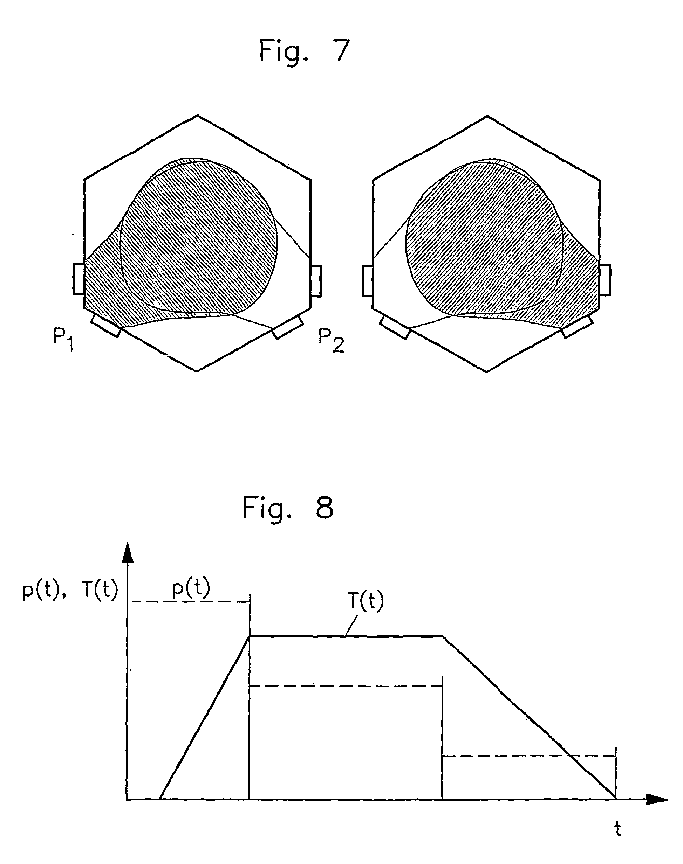

Figur 7 zeigt das Mode-Sweeping für den einfachsten Fall zweier Einkoppelstrukturpaare. Über beide Paare wird eingekoppelt, so dass sich das zentrale Prozessvolumen, das hier im Schnitt dargestellt ist, ausbildet. Durch das gegenläufig oszillierende Einkoppeln über die beiden Einkoppelstrukturpaare bewegt sich beispielsweise die Ausbeulung, wie durch die beiden, jeweils von einem Einkoppelstrukturpaar ausgehenden Konturen angedeutet, hin und her oder umlaufend. Hier wird die vorgegebene Leistung

$$p(t) = p_1(t) + p_2(t)$$

eingekoppelt.

Als Ergänzung zeigt Figur 8 eine beispielhafte Vorgabe der zeitlichen Erwärmung eines Werkstückes in einem Resonator oder vieler Werkstücke in einer Prozessstrasse. Zunächst wird eine lineare Rampe der Erwärmung gefahren und damit die höchste Mikrowellenleistung eingekoppelt. Dann wird über ein vorgegebenes Zeitintervall die Temperatur konstant gehalten, d.h. es müssen nur die Abstrahlverluste des Werkstücks über Mikrowelleneinkopplung kompensiert werden. Dazu braucht man weniger elektromagnetische Leistung als beim Aufwärmen. Am Schluss schließlich wird ein vorgegeben linearer Abkühlungsprozess gefahren. Die Abstrahlverluste werden nicht mehr ganz kompensiert. Hierzu ist noch weniger Leistung als beim Temperaturkonstanthalten notwendig. Der Temperatur- und Leistungsverlauf ist in Figur 8 beispielhaft und nur qualitativ dargestellt. Über in der Steuer- und Regeltechnik bekannte technische Einrichtung werden solche Prozesse rechnergestützt gefahren (intern HEPHAISTOS). Der Ist-Zustand des Werkstücks oder der Werkstücke wird über am Werkstück positionierte Wärmefühler oder über eine eventuell eichbare Wärmekamera erfasst und im Rechner für den Steuer- und Regelprozess verarbeitet.

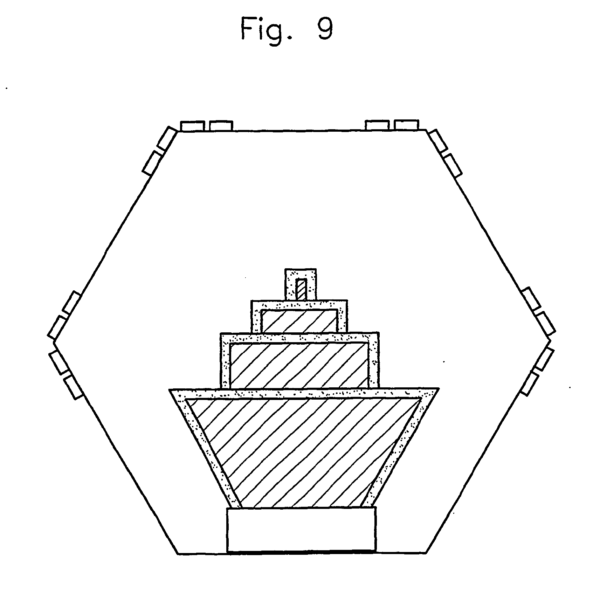

Die Bedeutung der homogenen Feldverteilung im zentralen Prozessvolumen des Resonators wird mit Figur 9 erläutert und hervorgehoben. Metallische Gegenstände in einem Mikrowellengerät für den Haushalt sind problematisch, und es wird auch in den zughörigen Betriebsanleitungen darauf hingewiesen, solche nicht in den Resonator zu stellen. Die Feldverteilung aufgrund der Resonatordimensionen im Wellenlängenbereich, $\lambda \approx 12 cm$, bei dem Mikrowellengerät für den Haushalt inhomogen ist. Drehteller in besseren Geräten oder ungleiche Erwärmung in einfacheren weisen darauf indirekt hin.

Gegenstände mit einer Schicht zu überziehen, um sie beispielsweise vor Einflüssen der Aufenthaltsumgebung zu schützen, ist eine häufige technische Veredelungsmaßnahme. Vom Aufwand her problematisch ist beispielsweise, ein metallisches Gehäuse vollständig bzw. lückenlos mit einer Epoxidharzschicht zu überziehen. Problematisch deshalb, weil diese Harzschicht ausgehärtet werden muss. Hier zeigt sich die Bedeutung der homogenen Feldverteilung bzw. der nahezu homogenen Feldverteilung im zentralen Prozessvolumen innerhalb des Resonators. Ein Metallgehäuse kann darin gefahrlos exponiert werden, weil wegen dieser homogenen Feldverteilung keine stromtreibende Feldkomponente parallel/tangential zur Metallfläche zustande kommt, die auf der Metalloberfläche aufgebrachte Schicht aber vollständig in dieses Feld eingetaucht ist und deshalb das Schichtvolumen überall gleichmäßig erwärmt, und zwar volumetrisch aus sich raus erwärmt wird und nicht über die Schichtoberfläche wie beim herkömmlichen thermischen Erwärmen über Wärmeeinwirkung in einem Autoklaven oder über Infrarotbestrahlung.

Große Metallgehäuse, wie beispielsweise ein Schiffskörper, lassen sich so in einem beispielsweise prismatischen Resonator mit hexagonalem Querschnitt mit einer ausgehärteten Epoxidharzschicht versehen. Die Resonatordimensionen hinsichtlich des Durchmessers und der Länge liegen im vielmetrigen Bereich. Der Resonator ist ein Blechgehäuse, an dem entlang wenigstens einer seiner Mantelsegmentlängskanten ein Einkoppelstrukturpaar angebracht ist. Ein solches Einkoppelstrukturpaar sitzt symmetrisch zu seiner Mantellängskante und hat, um genügend Mikrowellenleistung in den Resonator einzukoppeln, mehrere parallele Einkoppelstrukturen, hier beispielsweise zwei. Bei den Dimensionen im vielmetrigen Bereich kann mit einer Mikrowelle von 915 MHz, äquivalent 31 cm Wellenlänge, eine hinreichende Feldhomogenität im Prozessvolumen erreicht werden. Der stilisierte Schiffsrumpf, siehe seine Frontansicht in Figur 9, sitzt völlig im Prozessvolumen. Die Aushärtung der auf den Schiffsrumpf gleichmäßig aufgebrachten, gesamten Harzschicht geschieht ohne lokale Überhitzungen (hotspots) in einem qualitativ zeitlich Ablauf etwa gemäß Figur 8.

Die Zugänglichkeit zum Resonator richtet sich nach dem Prozess, der durchgeführt werden soll bzw. nach dem Einbau des Resonators in eine Prozessstrasse. Deshalb ist er wenigstens über eine Stirnwand oder über wenigstens ein Mantelwandsegment tür- oder schleusenartig oder durch Abnehmen zugänglich.

Denkbar ist, dass die Prozessierung von bestimmten Werkstücken mit der Mikrowelle bei Unterdruck oder bei einem Überdruck, beides mal mehr oder weniger ausgebildet, ablaufen muss. Damit die Struktur des elektromagnetischen Feldes im Resonatorinnern da auch definiert bleibt, ist die Resonatorwand außen mit geeignet steifem Profilmaterial verstrebt bzw. versteift.

Die Aufstellung des Resonators wird ebenfalls durch den zu führenden Prozess bestimmt, er kann deshalb mantelwandseitig und/oder stirnseitig lösbar verankert lagern. Zum Bewegen sitzt er beispielsweise auf einem Schlitten oder einem Wagen und hat deshalb an seiner Außenwand zum Manipulieren Haken und Ösen angebracht.

**Patentansprüche**

1. Mikrowellenresonator zum thermischen Prozessieren von Werkstoffen mittels Mikrowelle, bestehend aus:

   - einem hochmodigen Resonator mit geradzahlig konvex polygonalem, mindestens hexagonalem Querschnitt, dessen Mantelflächensegmente und beide Stirnseiten plan/eben sind und die Längsstoßkante zweier unmittelbar benachbarter Mantelflächensegmente, die Mantellängskante, parallel zur Längsachse des Resonators liegt,
   - einem entlang mindestens einer Mantellängskante symmetrisch angebrachten Einkoppelstrukturpaar für die Mikrowelle aus mindestens zwei länglichen Einkoppelstrukturen, wobei jede Einkoppelstruktur längs einer Führungsgeraden parallel zur Mantelängskante in der Resonatorwand eingebracht ist und die Führungsgerade zu der zugehörigen Mantellängskante eine Abstand derart hat, dass der von ihr in den Resonator eingekoppelte Mikrowellenstrahl bei der ersten Reflexion an zwei stoßenden Mantelflächensegmenten reflektiert und in zwei Strahlteile zerlegt wird, **dadurch gekennzeichnet, dass**

über jeder Einkoppelstruktur das Ende eines von einer Mikrowellenquelle herkommenden Rechteckhohlleiters ankommt, der eine Mikrowelle im $TE_{01}$-Mode führt, und

die Einkoppelstruktur in dem Mantelflächensegment aus einer Folge von sich nicht überlappenden, äquidistanten Durchbrüchen in der Resonatorwand, den Einkoppelkonturen/-öffungen, abwechselnd links und rechts der zugehörigen Führungsgerade parallel zur Mantellängskante besteht,

die Einkoppelkonturen/-öffnungen in einem Abstand aufeinander folgen, der eine phasenkonstante Auskopplung in den Resonator der sich im Rechteckhohlleiter im Basismode $TE_{01}$ befindlichen Mikrowelle bewirkt, und

sich die Breite d der Schlitze näherungsweise aus der Bedingung für kleine Beugungswinkel θ bei vorgegebener Mikrowellenlänge λ aus

$$\tan\theta = \frac{\lambda}{d}.$$

und für sehr kleine Beugungswinkel θ aus

$$\theta = \frac{\lambda}{d}$$

bestimmt.

**2.** Mikrowellenresonator nach Anspruch 1, **dadurch gekennzeichnet, dass** die Einkoppelkonturen mit ihrer Längsachse parallel zur Führungsgeraden liegen - stärkste Mikrowelleneinkopplung - oder senkrecht zu ihr stehen - schwächste Mikrowelleneinkopplung - oder eine Lage dazwischen einnehmen.

**3.** Mikrowellenresonator nach Anspruch 1, **dadurch gekennzeichnet, dass** die Einkoppelkonturen Rechtecke der Breite d und höchstens der Länge L = λ/2 der Grundwelle $H_{10}$ im Rechteckhohlleiter sind.

**4.** Mikrowellenresonator nach Anspruch 2, **dadurch gekennzeichnet, dass** die Einkoppelkonturen über eine Länge L = λ/2 der Grundwellenlänge dem Verlauf zweier zueinander spiegelbildlichen elektrischen Feldlinien, den E-Fellinien, des Grundmodes $TE_{01}$ in der Wand des Rechteckhohlleiters zumindest angenähert folgen, die im Bauch um die Breite d auseinander liegen.

**5.** Mikrowellenresonator nach einem der Ansprüche 2 bis 4, **dadurch gekennzeichnet, dass** die Einkoppelkonturen/-öffnungen zur Erreichung der auszukoppelnden Phasenkonstanz äquidistant sind und der Durchbruchabstand zur Führungsgeraden derart ist, dass sich eine isotrope Abstrahlung im reflektierten Fernfeld ergibt.

**6.** Mikrowellenresonator nach Anspruch 5, **dadurch gekennzeichnet, dass** entlang der Schnittgeraden der beiden Strahlebenen eines Einkoppelstrukturpaares ein höchstens über die Länge der Mantelkante ragender Modenrührer eingebaut ist.

**7.** Anlage/Prozessstrasse zum thermischen Prozessieren von Werkstoffen mittels Mikrowelle, **dadurch gekennzeichnet, dass** wenigstens zwei Mikrowellenresonatoren gemäß Anspruch 5 oder 6 stirnseitig modular so aneinander gereiht sind, dass durch eine Passage zwischen den zwei einander gegenüberstehende Stirnwänden hindurch Prozessgegenstände von einem Resonator zum folgenden transportiert werden können.

**8.** Verfahren zum Betreiben eines Mikrowellenresonators nach Anspruch 5 oder 6 oder der Mikrowellenresonatoren einer Prozessstrasse nach Anspruch 7, bestehend aus den Schritten:

die Leistungseinkopplung *p(t)* der Mikrowelle über die Einkoppelstrukturpaare eines Resonators erfolgt entsprechend einer Vorgabe zeitlich ansteigend, zeitlich konstant oder zeitlich abfallend,

wobei zusätzlich die Leistungseinkopplung $\sum_{i=1} p_i(t)$ über die $N$ Einkoppelstrukturpaare bei Bedarf, um den Vorgabewert $p(t)$ oszillierend/schwankend und diesen in der Summe haltend, versetzt gegeneinander betrieben werden kann, wodurch die stationäre Modenausbildung im Resonator synchron zu der Schwankung je nach der Anzahl $N$ der an der Resonatormantelwand angebrachten Einkoppelstrukturpaare örtlich oszilliert, zwischen zwei Orten hin und her wandert oder im Resonatorvolumen um die Resonatorlängsachse umläuft.

9. Verfahren nach Anspruch 8, **dadurch gekennzeichnet, dass** die Einkopplung über ein Einkoppelstrukturpaar $i$ gleichartig ist oder, um den Mittelwert $p_i(t)$ der Leistungseinkopplung oszillierend, gegenläufig verstimmt unter Wahrung des Mittelwertes $p_i(t)$ betrieben wird.

10. Thermisch prozessierbarer Gegenstand, in seiner Endform hergestellt in einem Mikrowellenresonator nach einem der Ansprüche 5 oder 6 oder in einer Prozessstraße nach Anspruch 7 gemäß dem Verfahren nach einem der Ansprüche 8 und 9.

## Claims

1. Microwave resonator for thermal processing of materials by means of microwaves, comprising:

   - a high-mode resonator with an even-numbered convexly polygonal, at least hexagonal cross-section, the outer peripheral face segments and both end-sides of which are planar/flat and the longitudinal abutting edge of two directly adjacent outer peripheral face segments, the outer peripheral longitudinal edge, is situated parallel to the longitudinal axis of the resonator,
   - an in- coupling structure pair for the microwave, which is fitted symmetrically along at least one outer peripheral longitudinal edge, comprising at least two oblong in- coupling structures, each in- coupling structure being introduced along a guide straight line parallel to the outer peripheral longitudinal edge in the resonator wall and the guide straight line having a spacing relative to the associated outer peripheral longitudinal edge such that the microwave beam which is coupled into the resonator by it is reflected during the first reflection on two abutting outer peripheral face segments and is divided into two beam parts, **characterised in that**,

   across each in-coupling structure, the end of a rectangular hollow conductor, which originates from a microwave source and guides a microwave in the $TE_{01}$ mode, is led in, and
   the in-coupling structure in the outer peripheral face segment comprises a sequence of non-overlapping, equidistant openings in the resonator wall, the in-coupling contours/openings, alternating to the right and left of the associated guide straight line parallel to the outer peripheral longitudinal edge,
   the in-coupling contours/openings follow each other at a spacing which effects a phase-constant out-coupling in the resonator of the microwave situated in the rectangular hollow conductor in the base mode $TE_{01}$, and
   the width d of the slots is determined approximately from the condition for small angles of refraction $\theta$ with a prescribed microwave length $\lambda$ from

$$\tan \theta = \frac{\lambda}{d}$$

   and for very small angles of refraction $\theta$ from

$$\theta = \frac{\lambda}{d}$$

2. Microwave resonator according to claim 1, **characterised in that** the in-coupling contours are situated with their longitudinal axis parallel to the guide straight line - strongest microwave in-coupling - or perpendicular thereto - weakest microwave in-coupling - or assume a position therebetween.

3. Microwave resonator according to claim 1, **characterised in that** the in-coupling contours are rectangles of the width d and at most of the length L = $\lambda/2$ of the base wave $H_{10}$ in the rectangular hollow conductor.

4. Microwave resonator according to claim 2, **characterised in that** the in-coupling contours, over a length L = $\lambda/2$ of the base wave length, follow the course of two electrical field lines which are mirror images of each other, the E-field lines, of the base mode $TE_{01}$ in the wall of the rectangular hollow conductor at least approximately and which are situated at a spacing in the convex area by the width d.

5. Microwave resonator according to one of the claims 2 to 4, **characterised in that** the in-coupling contours/openings are equidistant in order to achieve phase constancy which is to be coupled out and the opening spacing relative to the guide straight line is such that an isotropic radiation is produced in the reflected distant field.

6. Microwave resonator according to claim 5, **characterised in that** a mode mixer which protrudes at most beyond the length of the outer peripheral edge is installed along the intersection straight line of the two beam planes of an in-coupling structure pair.

7. Plant/processing line for thermal processing of materials by means of microwaves, **characterised in that** at least two microwave resonators according to claim 5 or 6 are strung together at the end-side in a modular manner such that process objects can be transported from one resonator to the following one through a passage between the two oppositely situated endwalls.

8. Method for operating a microwave resonator according to claim 5 or 6 or the microwave resonators of a processing line according to claim 7, comprising the steps:

   the power in-coupling $p(t)$ of the microwave is effected via the in-coupling structure pairs of a resonator, corresponding to a specification, temporally rising, temporally constant or temporally decreasing,

   in addition the power in-coupling $\sum_{i=1}^{N'} p_i(t)$ being able to be operated mutually offset via the $N'$ in-coupling structure pairs if required, oscillating/varying about the prescribed value $p(t)$ and maintaining this in total, as a result of which the stationary mode configuration in the resonator oscillates locally synchronously to the variation according to the number $N'$ of in-coupling structure pairs fitted on the resonator outer peripheral wall, moves to and fro between two locations or circulates in the resonator volume about the resonator longitudinal axis.

9. Method according to claim 8, **characterised in that** the in-coupling is uniform over one in-coupling structure pair $i$ or, oscillating about the average value $p_i(t)$ of the power in-coupling, is operated oppositely detuned whilst maintaining the average value $p_i(t)$.

10. Thermally processible object, produced in its end form in a microwave resonator according to one of the claims 5 or 6 or in a processing line according to claim 7 according to the method according to one of the claims 8 and 9.

**Revendications**

1. Résonateur à micro-ondes pour le traitement thermique de matières au moyen d'une micro-onde, constitué :

   - d'un résonateur hautement modal ayant une section polygonale convexe avec un nombre pair de côtés, par exemple hexagonale, dont les segments de surface de la chemise et les deux côtés avant sont plans et la jointure longitudinale de deux segments de surface directement voisins de la chemise, l'arête longitudinale de la chemise, est parallèle à l'axe longitudinal du résonateur,
   - pour les micro-ondes une paire de structures d'injection, placée symétriquement le long d'au moins une arête longitudinale de la chemine, et constituée d'au moins deux structures d'injection allongées, chaque structure d'injection étant placée le long d'une droite de guidage parallèlement à l'arête longitudinale de la chemise, dans la paroi du résonateur et la droite de guidage est à une distance telle de l'arête longitudinale de la chemise correspondante que le faisceau de micro-ondes injecté par celle-ci dans le générateur, se réfléchit sur deux segments de surface de la chemise contigus lors de la première réflexion et est décomposé en deux parties de faisceau,

**caractérisé en ce que**

l'extrémité d'un conducteur creux rectangulaire provenant d'une source de micro-ondes, qui conduit une micro-onde en mode $TE_{01}$, arrive au-dessus de chaque structure d'injection et

la structure d'injection, dans le segment de surface de la chemise, est constituée d'une suite de passages équidistants qui ne se chevauchent pas, dans la paroi du résonateur, de contours/d'ouvertures d'injection, alternativement à gauche et à droite de la droite de guidage correspondante, parallèlement à l'arête longitudinale de la chemise,

les contours/ouvertures d'injection se succèdent à une distance qui provoque une sortie à phase constante dans le résonateur de micro-ondes se trouvant dans le conducteur creux rectangulaire en mode de base $TE_{01}$, et

la largeur d des fentes est déterminée approximativement à partir de la condition pour de petits angles de diffraction θ pour une longueur de micro-onde prédéfinie λ de

$$\tan\theta = \frac{\lambda}{d}.$$

et pour de très petits angles de diffraction θ de

$$\theta = \frac{\lambda}{d}$$

2. Résonateur à micro-ondes selon la revendication 1,
   **caractérisé en ce que**
   les contours d'injection ont, leur axe longitudinal, parallèle à la droite de guidage - injection de micro-onde la plus forte - ou perpendiculaire à celle-ci (injection de micro-onde la plus faible) ou occupent une position entre.

3. Résonateur à micro-ondes selon la revendication 1,
   **caractérisé en ce que**
   les contours d'injection sont des rectangles ayant une largeur d et au maximum une longueur L = λ/2 de l'onde de base $H_{10}$ dans le conducteur creux rectangulaire.

4. Résonateur à micro-ondes selon la revendication 2,
   **caractérisé en ce que**
   les contours d'injection suivent au moins approximativement sur une longueur L = λ/2 de la longueur de l'onde de base, le parcours de deux lignes de champ électrique en miroir l'une par rapport à l'autre, soit les lignes de champ électrique du mode de base $TE_{01}$ dans la paroi du conducteur creux rectangulaire, distantes de la largeur d dans le ventre.

5. Résonateur à micro-ondes selon l'une quelconque des revendications 2 à 4,
   **caractérisé en ce que**
   les contours/ouvertures d'injection sont équidistantes afin d'obtenir la constante de phase à extraire et la distance des passages par rapport aux droites de guidage est telle qu'on obtient un rayonnement isotrope dans le champ éloigné réfléchi.

6. Résonateur à micro-ondes selon la revendication 5,
   **caractérisé en ce que**
   un brasseur de modes dépassant au maximum sur la longueur de l'arête de chemise se trouve le long de la droite de guidage des deux plans de rayonnement d'une paire de structures d'injection.

7. Installation/chaîne de processus pour le traitement thermique de matières au moyen d'une micro-onde,
   **caractérisée en ce qu'**
   au moins deux résonateurs à micro-ondes selon la revendication 5 ou la revendication 6 sont alignés côte à côte de manière modulaire sur le côté avant de manière à pouvoir transporter des objets à traiter d'un résonateur à l'autre à travers un passage entre deux parois avant se faisant face.

8. Procédé de fonctionnement d'un résonateur à micro-ondes selon la revendication 5 ou la revendication 6 ou de résonateurs à micro-ondes d'une chaîne de processus selon la revendication 7, comportant les étapes suivantes :

- on crée l'injection de puissance p(t) de micro-ondes a lieu par l'intermédiaire des paires de structures d'injection d'un résonateur conformément à une consigne, de manière ascendante dans le temps, constante dans le temps ou descendante dans le temps,
- on décale en plus l'injection de puissance

$$\sum_{i=1}^{N'} p_i(t)$$

en sens contraire l'une de l'autre sur les N' paires de structures d'injection, si nécessaire, en oscillant/fluctuant de la valeur de consigne p(t) et en maintenant celle-ci au total, et ainsi l'apparition de modes stationnaires dans le résonateur oscillant localement de manière synchrone à la fluctuation en fonction du nombre N' de paires de structures d'injection placées sur la paroi de chemise du résonateur, migre d'un côté et de l'autre entre deux endroits ou circule dans le volume du résonateur autour de l'axe longitudinal du résonateur.

9. Procédé selon la revendication 8,
**caractérisé en ce qu'**
on produit l'injection sur une paire de structures d'injection i de façon égalisée, ou en oscillant autour de la valeur médiane $p_i(t)$ de l'injection de puissance, décalées en sens inverse, tout en conservant la valeur médiane $p_i(t)$.

10. Objet pouvant être traité thermiquement, fabriqué dans sa forme finale dans un résonateur à micro-ondes selon l'une quelconque des revendications 5 ou 6, ou dans une chaîne de processus selon la revendication 7, conformément au procédé selon l'une quelconque des revendications 8 et 9.

Fig. 1

Fig. 2

Fig. 3

Fig. 4a

Fig. 4b

## Fig. 5

$$L = \frac{1}{2}\lambda(H_{10})$$

Fig. 6b

Fig. 6a

# Fig. 7

P₁      P₂

# Fig. 8

Fig. 9